# EUROPEAN PATENT SPECIFICATION

(11) **EP 3 372 378 B1**
(45) Date of publication and mention of the grant of the patent: **25.12.2019**
(21) Application number: 18160103.0
(22) Date of filing: 06.03.2018
(51) Int. Cl.: B29C 45/50, H02K 5/173

(54) **INJECTION MOLDING MACHINE**
SPRITZGIESSMASCHINE
MACHINE DE MOULAGE À INJECTION

(30) Priority: 07.03.2017 JP 2017043251
(43) Date of publication of application: 12.09.2018
(73) Proprietor: Sumitomo Heavy Industries, Ltd., Tokyo 141-6025 (JP)
(72) Inventor: YAMASHITA, Koki, Chiba, 263-0001 (JP)
(74) Representative: Louis Pöhlau Lohrentz

(56) References cited:
- EP-A2- 1 125 711
- JP-A- 2014 226 895
- US-B1- 6 533 572

## Description

### BACKGROUND OF THE INVENTION

### Field of the Invention

Certain embodiment of the present invention relates to an injection molding machine.

### Description of Related Art

Japanese Patent Application JP 2014 226895 discloses an injection apparatus in which the bearing of the injection motor serves also as the bearing of the associated ball screw.

United States Patent US 6,533,572 B1 discloses an injection molding machine in which an end portion of a rotor shaft of the servomotor is connected directly to an end portion of a ball screw of a ball screw mechanism.

European Patent Application EP 1 125 711 A2 discloses an injection molding machine in which the rotation of a rotor is transmitted via a spline shaft to a ball screw shaft.

In an injection molding machine described in Japanese Unexamined Patent Application Publication JP 2002 355867 A, a motor shaft-side spline engaged with a screw shaft-side spline for injection driving is provided on an inner peripheral surface of a bearing cylinder separated from a motor shaft, and thus, the screw shaft and the motor shaft can be connected to each other by the splines of both shafts.

In the related art, a motor-side part and a screw shaft-side part are connected to each other outside a motor, and thus, there is a problem that the entire length of the injection molding machine is lengthened.

### SUMMARY OF THE INVENTION

The present invention is made in consideration of the above-described problem, and a main object thereof is to provide an injection molding machine in which the entire length thereof can be shortened.

In order to achieve the object, there is provided an injection molding machine according to claim 1.

According to an aspect of the present invention, the injection molding machine in which the entire length thereof can be shortened is provided.

### BRIEF DESCRIPTION OF THE DRAWINGS

Fig. 1 is a view showing a state when a mold opening of an injection molding machine according to an embodiment is completed.
Fig. 2 is a view showing a state when a mold of the injection molding machine according to the embodiment is clamped.
Fig. 3 is a top view showing an example of a structure of an injection unit shown in Fig. 2.
Fig. 4 is a cross-sectional view of the injection unit taken along line IV-IV of Fig. 3.
Fig. 5 is a cross-sectional view of the injection unit taken along line V-V of Fig. 3.
Figs. 6A and 6B are cross-sectional views for comparing a main portion of an injection unit of a first embodiment and a main portion of an injection unit according to a second embodiment with each other.

### DETAILED DESCRIPTION OF THE INVENTION

Hereinafter, an embodiment of the present invention is described with reference to the drawings. However, in each drawing, the same or corresponding reference numerals are assigned to the same or corresponding configurations, and descriptions thereof are omitted.

### Injection Molding Machine

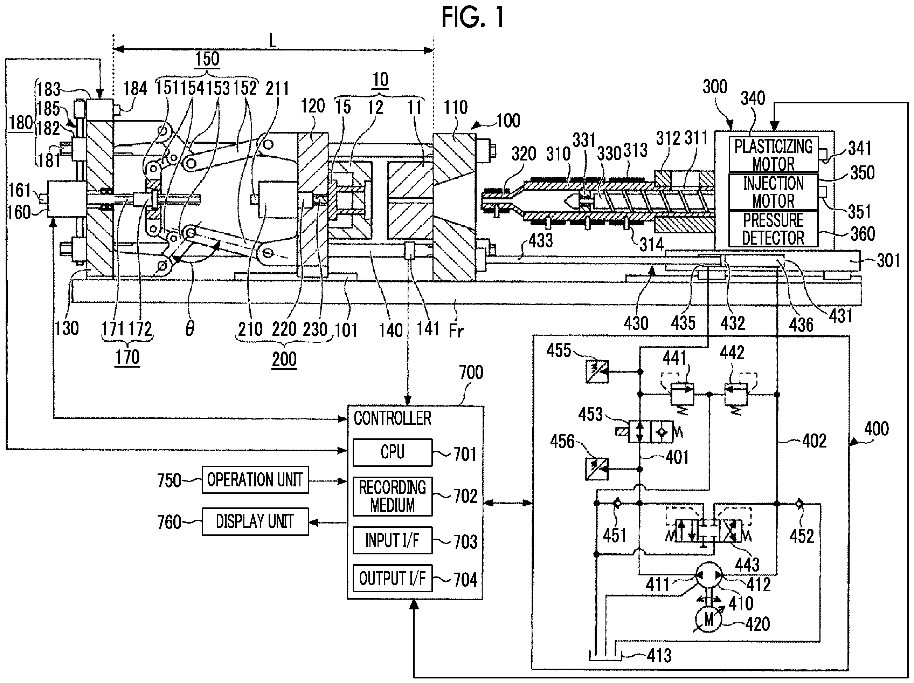

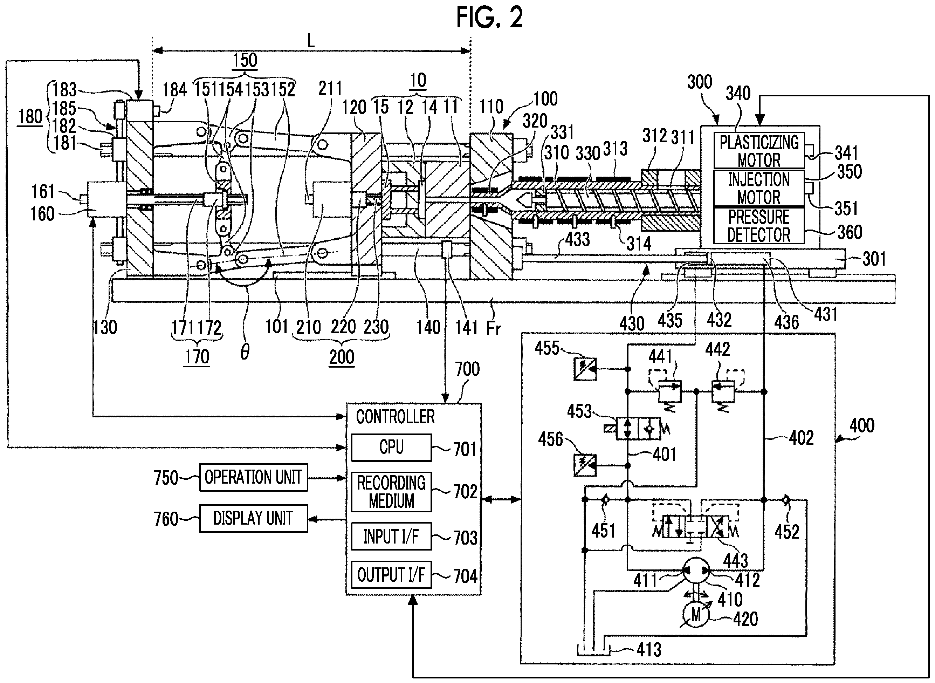

Fig. 1 is a view showing a state when a mold opening of an injection molding machine according an embodiment is completed. Fig. 2 is a view showing a state when a mold of the injection molding machine according to the embodiment is clamped. As shown in Figs. 1 and 2, the injection molding machines include a mold clamping unit 100, an ejector unit 200, an injection unit 300, a movement unit 400, and a controller 700. Hereinafter, each component of the injection molding machine will be described.

### Mold Clamping Unit

In descriptions of the mold clamping unit 100, a movement direction (right direction in Figs. 1 and 2) of a movable platen 120 when a mold is closed is defined as a front side, and a movement direction (left direction in Figs. 1 and 2) of the movable platen 120 when the mold is open is defined as a rear side.

The mold clamping unit 100 performs closing, clamping, and opening on a mold unit 10. For example, the mold clamping unit 100 is a horizontal type clamping unit and mold opening and closing directions are a horizontal direction. The mold clamping unit 100 includes a stationary platen 110, the movable platen 120, a toggle support 130, a tie bar 140, a toggle mechanism 150, a mold clamping motor 160, a motion conversion mechanism 170, and a mold space adjustment mechanism 180.

The stationary platen 110 is fixed to the frame Fr. A stationary mold 11 is attached to a surface of the stationary platen 110 facing the movable platen 120.

The movable platen 120 is movable in the mold opening and closing directions with respect to the frame Fr. A guide 101 which guides the movable platen 120 is placed on the frame Fr. A movable mold 12 is attached to a surface of the movable platen 120 facing the stationary platen 110.

The movable platen 120 moves forward or rearward with respect to the stationary platen 110, and thus, closing, clamping, and opening of the mold are performed. The mold unit 10 is configured of the stationary mold 11 and the movable mold 12.

The toggle support 130 is connected so as to be separated from the stationary platen 110, and is placed on the frame Fr to be movable in mold opening and closing directions. In addition, the toggle support 130 may be movable along a guide which is placed on the frame Fr. The guide of the toggle support 130 may be also used as the guide 101 of the movable platen 120.

Moreover, in the present embodiment, the stationary platen 110 is fixed to the frame Fr, and the toggle support 130 is movable in the mold opening and closing directions with respect to the frame Fr. However, the toggle support 130 may be fixed to the frame Fr, and the stationary platen 110 may be movable in the mold opening and closing directions with respect to the frame Fr.

The stationary platen 110 and the toggle support 130 are connected to each other with a gap L in the mold opening and closing directions by the tie bar 140. A plurality of tie bars 140 may be used. The tie bars 140 are parallel in the mold opening and closing directions and extend according to a mold clamping force. A tie bar strain detector 141 which detects strain of the tie bar 140 is provided in at least one tie bar 140. The tie bar strain detector 141 sends signals indicating the detection results to the controller 700. The detection results of the tie bar strain detector 141 are used for detection or the like of the mold clamping force.

In addition, in the present embodiment, the tie bar strain detector 141 is used as a mold clamping force detector which detects the mold clamping force. However, the present invention is not limited to this. The mold clamping force detector is not limited to a strain gauge type detector, and may be a piezoelectric type detector, a capacitance type detector, a hydraulic type detector, an electromagnetic type detector, or the like, and the attachment position of the mold clamping force detector is also not limited to the tie bar 140.

The toggle mechanism 150 is disposed between the movable platen 120 and the toggle support 130 and moves the movable platen 120 in the mold opening and closing directions with respect to the toggle support 130. The toggle mechanism 150 is configured of a crosshead 151, a pair of link groups, or the like. Each link group includes a first link 152 and a second link 153 which are bendably/strechably connected to each other by pins or the like. The first link 152 is attached to the movable platen 120 so as to be oscillated by pins or like and the second link 153 is attached to the toggle support 130 so as to be oscillated by pins or the like. The second link 153 is attached to the crosshead 151 via a third link 154. If the crosshead 151 moves forward or rearward with respect to the toggle support 130, the first link 152 and the second link 153 are bent and stretched and the movable platen 120 moves forward or rearward with respect to the toggle support 130.

In addition, the configuration of the toggle mechanism 150 is not limited to the configuration shown in Figs. 1 and 2. For example, in Figs. 1 and 2, the number of nodes of each link group is five. However, the number of nodes may be four, and one end portion of the third link 154 may be connected to a node between the first link 152 and the second link 153.

The mold clamping motor 160 is attached to the toggle support 130 and operates the toggle mechanism 150. The mold clamping motor 160 moves the crosshead 151 forward or rearward with respect to the toggle support 130, and thus, the first links 152 and the second links 153 are bent and stretched, and the movable platen 120 moves forward or rearward with respect to the toggle support 130. The mold clamping motor 160 is directly connected to the motion conversion mechanism 170. However, the mold clamping motor 160 may be connected to the motion conversion mechanism 170 via a belt, a pulley, or the like.

The motion conversion mechanism 170 converts a rotary motion of the mold clamping motor 160 into a linear motion of the crosshead 151. The motion conversion mechanism 170 includes a screw shaft 171 and a screw nut 172 which is screwed to the screw shaft 171. A ball or a roller may be interposed between the screw shaft 171 and the screw nut 172.

The mold clamping unit 100 performs a mold closing process, a mold clamping process, a mold opening process, or the like under the control of the controller 700.

In the mold closing process, the mold clamping motor 160 is driven to move the crosshead 151 forward to a mold closing completion position at a set speed. Accordingly, the movable platen 120 moves forward or the movable mold 12 comes into contact with the stationary mold 11. For example, a position or speed of the crosshead 151 is detected using an encoder 161 of the mold clamping motor 160 or the like. The encoder 161 detects the rotation of the mold clamping motor 160 and sends signals indicating the detection results to the controller 700.

In the mold clamping process, the mold clamping motor 160 is further driven to further move the crosshead 151 forward from the mold closing completion position to a mold clamping position, and thus, a mold clamping force is generated. When the mold is clamped, a cavity space 14 is formed between the movable mold 12 and the stationary mold 11, and the cavity space 14 is filled with a liquid molding material by the injection unit 300. A filled molding material is solidified, and thus, a molding product is obtained. A plurality of cavity spaces 14 may be provided, and in this case, a plurality of molding products may be simultaneously obtained.

In the mold opening process, the mold clamping motor 160 is driven to move the crosshead 151 rearward to a mold opening completion position at a set speed. Accordingly, the movable platen 120 moves rearward, and the movable mold 12 is separated from the stationary mold 11. Thereafter, the ejector unit 200 ejects the molding product from the movable mold 12.

Setting conditions in the mold closing process and the mold clamping process are collectively set as a series of setting conditions. For example, a speed or positions (including a speed switching position, a mold closing completion position, and a mold clamping position) of the crosshead 151 in the mold closing process and the mold clamping process are collectively set as a series of setting conditions. In addition, instead of the speed, the positions, or the like of the crosshead 151, a speed, positions, or the like of the movable platen 120 may be set.

Meanwhile, the toggle mechanism 150 amplifies a driving force of the mold clamping motor 160 and transmits the driving force to the movable platen 120. An amplification magnification of the toggle mechanism 150 is also referred to as a toggle magnification. The toggle magnification is changed according to an angle θ (hereinafter, also referred to a "link angle θ") between the first link 152 and the second link 153. The link angle θ is obtained from the position of the crosshead 151. When the link angle θ is 180°, the toggle magnification becomes the maximum value.

In a case where a space of the mold unit 10 is changed by replacement of the mold unit 10, a temperature change of the mold unit 10, or the like, a mold space adjustment is performed such that a predetermined mold clamping force is obtained when the mold is clamped. For example, in the mold space adjustment, the gap L between the stationary platen 110 and the toggle support 130 is adjusted such that the link angle θ of the toggle mechanism 150 at the time of a touch type where the movable mold 12 comes into contact with the stationary mold 11 becomes a predetermined angle.

The mold clamping unit 100 includes the mold space adjustment mechanism 180 which performs the mold space adjustment by adjusting the gap L between the stationary platen 110 and the toggle support 130. The mold space adjustment mechanism 180 includes a screw shaft 181 which is formed on a rear end portion of the tie bar 140, a screw nut 182 which is rotatably supported by the toggle support 130, and a mold space adjustment motor 183 which rotates the screw nut 182 screwed to the screw shaft 181.

The screw shaft 181 and the screw nut 182 are provided for each tie bar 140. A rotation of the mold space adjustment motor 183 may be transmitted to a plurality of screw nuts 182 via a rotation transmission portion 185 configured of a belt, a pulley, or the like. The plurality of screw nuts 182 can be synchronously rotated. In addition, it is possible to rotate the plurality of screw nuts 182 individually by changing a transmission path of the rotation transmission portion 185.

For example, the rotation transmission portion 185 is configured of a gear or the like instead of the belt, the pulley, or the like. In this case, a driven gear is formed on an outer periphery of each screw nut 182, a drive gear is attached to an output shaft of the mold space adjustment motor 183, and an intermediate gear which engages with a plurality of driven gears and drive gears is rotatably held by a center portion of the toggle support 130.

An operation of the mold space adjustment mechanism 180 is controlled by the controller 700. The controller 700 drives the mold space adjustment motor 183 to rotate the screw nut 182, and thus, the position of the toggle support 130 which rotatably holds the screw nut 182 with respect to the stationary platen 110 is adjusted, and the gap L between the stationary platen 110 and the toggle support 130 is adjusted.

In addition, in the present embodiment, the screw nut 182 is rotatably held with respect to the toggle support 130 and the tie bar 140 in which the screw shaft 181 is formed is fixed to the stationary platen 110. However, the present invention is not limited to this.

For example, the screw nut 182 may be rotatably held with respect to the stationary platen 110 and the tie bar 140 may be fixed to the toggle support 130. In this case, the gap L can be adjusted by rotating the screw nut 182.

Moreover, the screw nut 182 may be fixed to the toggle support 130 and the tie bar 140 may be rotatably held with respect to the stationary platen 110. In this case, the gap L can be adjusted by rotating the tie bar 140.

Moreover, the screw nut 182 may be fixed to the stationary platen 110 and the tie bar 140 may be rotatably held with respect to the toggle support 130. In this case, the gap L can be adjusted by rotating the tie bar 140.

The gap L is detected using an encoder 184 of the mold space adjustment motor 183. The encoder 184 detects a rotation amount or a rotation direction of the mold space adjustment motor 183 and sends signals indicating the detection results to the controller 700. The detection results of the encoder 184 are used to control the position of the toggle support 130 or to monitor or control the gap L.

The mold space adjustment mechanism 180 rotates one of the screw shaft 181 and the screw nut 182 which are screwed to each other to adjust the gap L. A plurality of mold space adjustment mechanisms 180 may be used, and a plurality of mold space adjustment motor 183 may be used.

Moreover, in order to adjust the gap L, the mold space adjustment mechanism 180 of the present embodiment includes the screw shaft 181 formed on the tie bar 140 and the screw nut 182 screwed to the screw shaft 181. However, the present invention is not limited to this.

For example, the mold space adjustment mechanism 180 may include a tie bar temperature controller which controls the temperature of the tie bar 140. The tie bar temperature controller is attached to each tie bar 140 and adjusts the temperatures of the plurality of tie bars 140 in cooperation. The gap L increases as the temperature of the tie bar 140 increases . The temperatures of the plurality of tie bars 140 can be adjusted independently.

For example, the tie bar temperature controller includes a heating unit such as a heater and controls the temperature of the tie bar 140 by heating. The tie bar temperature controller may include a cooler such as a water cooling jacket and may control the temperature of the tie bar 140 by cooling. The tie bar temperature controller may include both the heating unit and the cooler.

In addition, the mold clamping unit 100 of the present embodiment is a horizontal type mold clamping unit in which the mold opening and closing directions are horizontal directions. However, the mold clamping unit 100 may be a vertical type mold clamping unit in which the mold opening and closing directions are vertical directions. The vertical type mold clamping unit includes a lower platen, an upper platen, a toggle support, tie bars, a toggle mechanism, a mold clamping motor, or the like. Any one of the lower platen and the upper platen is used as a stationary platen and the other is used as a movable platen. A lower mold is attached to the lower platen and an upper mold is attached to the upper platen. The lower mold and the upper mold configure the mold unit. The lower mold may be attached to the lower platen via a rotary table. The toggle support is disposed below the lower platen. The toggle mechanism is disposed between the toggle support and the lower platen and lifts or lowers the movable platen. The mold clamping motor operates the toggle mechanism. The tie bars are parallel to each other in the vertical direction, penetrate the lower platen, and connect the upper platen and the toggle support to each other. In a case where the mold clamping unit is a vertical mold clamping unit, in general, the number of the tie bars is three. In addition, the number of the tie bars is not particularly limited.

In addition, the mold clamping unit 100 of the present embodiment has the mold clamping motor 160 as a drive source. However, the mold clamping unit 100 may have a hydraulic cylinder instead of the mold clamping motor 160. In addition, the mold clamping unit 100 may have a linear motor for opening and closing a mold and may have an electromagnet for clamping a mold.

### Ejector Unit

Similarly to the descriptions of the mold clamping unit 100, in descriptions of the ejector unit 200, the movement direction (right direction in Figs. 1 and 2) of the movable platen 120 when the mold is closed is defined as the front side, and the movement direction (left direction in Figs. 1 and 2) of the movable platen 120 when the mold is opened is defined as the rear side.

The ejector unit 200 ejects the molding product from the mold unit 10. The ejector unit 200 includes an ejector motor 210, a motion conversion mechanism 220, an ejector rod 230, or the like.

The ejector motor 210 is attached to the movable platen 120. The ejector motor 210 is directly connected to the motion conversion mechanism 220. However, the ejector motor 210 may be connected to the motion conversion mechanism 220 via a belt, a pulley, or the like.

The motion conversion mechanism 220 converts a rotary motion of the ejector motor 210 into a linear motion of the ejector rod 230. The motion conversion mechanism 220 includes a screw shaft and a screw nut which is screwed to the screw shaft. A ball or a roller may be interposed between the screw shaft and the screw nut.

The ejector rod 230 can move forward or rearward through a through-hole of the movable platen 120. A front end portion of the ejector rod 230 comes into contact with a movable member 15 which is disposed to be movable forward or rearward inside the movable mold 12. The front end portion of the ejector rod 230 may be connected to the movable member 15 or may not be connected to the movable member 15.

The ejector unit 200 performs an ejection process under the control of the controller 700.

In the ejection process, the ejector motor 210 is driven to move the ejector rod 230 at a set speed, and thus, the movable member 15 moves forward and the molding product is ejected. Thereafter, the ejector motor 210 is driven to move the ejector rod 230 rearward at a set speed, and thus, the movable member 15 moves rearward to an original position. For example, a position or speed of the ejector rod 230 is detected using an encoder 211 of the ejector motor 210. The encoder 211 detects the rotation of the ejector motor 210 and sends signals indicating the detection results to the controller 700.

### Injection Unit

Unlike the descriptions of the mold clamping unit 100 or the descriptions of the ejector unit 200, in descriptions of the injection unit 300, a movement direction (left direction in Figs. 1 and 2) of a screw 330 during filling is referred to as a front side, and a movement direction (right direction in Figs. 1 and 2) of the screw 330 during plasticizing is referred to as a rear side.

The injection unit 300 is installed on a slide base 301 which is movable forward or rearward with respect to the frame Fr, and is movable forward or rearward with respect to the mold unit 10. The injection unit 300 comes into contact with the mold unit 10, and thus, the cavity space 14 inside the mold unit 10 is filled with the molding material. For example, the injection unit 300 includes a cylinder 310, a nozzle 320, the screw 330, a plasticizing motor 340, an injection motor 350, a pressure detector 360, or the like.

The cylinder 310 heats the molding material which is supplied from a supply port 311 to the inner portion of the cylinder 310. The supply port 311 is formed on a rear portion of the cylinder 310. A cooler 312 such as a water cooling cylinder is provided on an outer periphery of the rear portion of the cylinder 310. A heating unit 313 such as a band heater and a temperature detector 314 are provided on an outer periphery of the cylinder 310 on a front side of the cooler 312.

The cylinder 310 is divided into a plurality of zones in an axial direction (right and left directions in Figs. 1 and 2) of the cylinder 310. The heating unit 313 and the temperature detector 314 are provided in each zone. The controller 700 controls the heating unit 313 such that a detection temperature of the temperature detector 314 for each zone becomes a set temperature.

The nozzle 320 is provided on the front end portion of the cylinder 310 and presses the mold unit 10. The heating unit 313 and the temperature detector 314 are provided on an outer periphery of the nozzle 320. The controller 700 controls the heating unit 313 such that a detection temperature of the nozzle 320 becomes a set temperature.

The screw 330 is disposed in the cylinder 310 so as to be rotatable and movable forward or rearward. If the screw 330 rotates, the molding material is fed forward along spiral grooves of the screw 330. The molding material is gradually melted by heat from the cylinder 310 while being fed forward. The liquid molding material is fed to a front portion of the screw 330 and is accumulated in the front portion of the cylinder 310, and thus, the screw 330 moves rearward. Thereafter, if the screw 330 moves forward, the liquid molding material accumulated in front of the screw 330 is injected from the nozzle 320 and the inside of the mold unit 10 is filled with the liquid molding material.

A back flow prevent ion ring 331 is attached to a front portion of the screw 330 to be movable forward or rearward as a backflow prevention valve which prevents backflow of the molding material from the front side of the screw 330 toward the rear side when the screw 330 is pushed forward.

When the screw 330 moves forward, the backflow prevention ring 331 is pushed toward the rear side by the pressure of the molding material in front of the screw 330 and moves rearward to a close position (refer to Fig. 2) at which a flow path of the molding material is closed. Accordingly, the molding material accumulated in front of the screw 330 is prevented from flowing toward the rear side.

Meanwhile, when the screw 330 is rotated, the backflow prevention ring 331 is pushed toward the front side by the pressure of the molding material fed forward along the spiral grooves of the screw 330 and moves forward to an open position (refer to Fig. 1) at which the flow path of the molding material is open. Accordingly, the molding material is fed to the front side of the screw 330.

The backflow prevention ring 331 may be either a co-rotation type ring which rotates together with the screw 330 or a non-co-rotation type ring which does not rotate together with the screw 330.

In addition, the injection unit 300 may include a drive source which moves the backflow prevention ring 331 forward or rearward between the open position and the close position.

The plasticizing motor 340 rotates the screw 330. A drive source which rotates the screw 330 is not limited to the plasticizing motor 340 and may be a hydraulic pump or the like, for example.

The injection motor 350 moves the screw 330 forward or rearward. A motion conversion mechanism or the like which converts a rotary motion of the injection motor 350 into a linear motion of the screw 330 is provided between the injection motor 350 and the screw 330. For example, the motion conversion mechanism includes a screw shaft and a screw nut which is screwed to the screw shaft. A ball, a roller, or the like may be provided between the screw shaft and the screw nut. A drive source which moves the screw 330 forward or rearward is not limited to the injection motor 350 and may be a hydraulic cylinder, for example .

The pressure detector 360 detects a pressure transmitted between the injection motor 350 and the screw 330. The pressure detector 360 is provided on a pressure transmission path between the injection motor 350 and the screw 330 and detects a pressure applied to the pressure detector 360.

The pressure detector 360 sends signals indicating the detection results to the controller 700. The detection results of the pressure detector 360 are used to control or monitor a pressure received by the screw 330 from the molding material, a back pressure with respect to the screw 330, a pressure applied from the screw 330 to the molding material, or the like.

The injection unit 300 performs a filling process, a holding pressure process, a plasticizing process, or the like under the control of the controller 700.

In the filling process, the injection motor 350 is driven to move the screw 330 forward at a set speed, and the cavity space 14 inside the mold unit 10 is filled with the liquid molding material accumulated in front of the screw 330. For example, a position or speed of the screw 330 is detected using an encoder 351 of the injection motor 350. The encoder 351 detects the rotation of the injection motor 350 and sends signals indicating the detection results to the controller 700. If the position of the screw 330 reaches a set position, switching (so called V/P switching) from the filling process to the holding pressure process is performed. The position at which the V/P switching is performed is also referred to a V/P switching position. The set speed of the screw 330 may be changed according to the position of the screw 330, the time, or the like.

Moreover, in the filling process, after the position of the screw 330 reaches the set position, the screw 330 may temporarily stop at the set position, and thereafter, the V/P switching may be performed. Immediately before the V/P switching, instead of stopping the screw 330, the screw 330 may move forward or may move rearward at a very slow speed.

In the holding pressure process, the injection motor 350 is driven to push the screw 330 forward, a pressure (hereinafter, also referred to as a "holding pressure") of the molding material on a front end portion of the screw 330 is held at a set pressure, and the molding material remaining inside the cylinder 310 is pressed toward the mold unit 10. Insufficient molding materials can be replenished by cooling shrinkage in the mold unit 10. For example, the holding pressure is detected using the pressure detector 360. The pressure detector 360 sends signals indicating the detection results to the controller 700. A set value of the holding pressure may be changed according to an elapsed time from the starting of the holding pressure process, or the like.

In the holding pressure process, the molding material inside the cavity space 14 in the mold unit 10 is gradually cooled, and when the holding pressure process is completed, an inlet of the cavity space 14 is closed by the molding material which is solidified. This state is referred to as a gate seal, and a backflow of the molding material from the cavity space 14 is prevented. After the holding pressure process, a cooling process starts. In the cooling process, solidification of the molding material in the cavity space 14 is performed. In order to shorten a molding cycle time, the plasticizing process may be performed during the cooling process.

In the plasticizing process, the plasticizing motor 340 is driven to rotate the screw 330 at a set rotating speed and the molding material is fed forward along the spiral grooves of the screw 330 by the screw 330. According to this, the molding material is gradually melted. The screw 330 moves rearward as the liquid molding material is fed to the front side of the screw 330 and is accumulated in front of the cylinder 310. For example, the rotating speed of the screw 330 is detected using an encoder 341 of the plasticizing motor 340. The encoder 341 detects sends signals indicating the detection results to the controller 700.

In the plasticizing process, in order to restrict an abrupt rearward movement of the screw 330, the injection motor 350 may be driven so as to apply a set back pressure to the screw 330. For example, the back pressure with respect to the screw 330 is detected using the pressure detector 360. The pressure detector 360 sends signals indicating the detection results to the controller 700. If the screw 330 moves rearward to a plasticizing completion position and a predetermined amount of the molding materials is accumulated in front of the screw 330, the plasticizing process is completed.

In addition, the injection unit 300 of the present embodiment is an inline and screw type injection unit. However, the injection unit 300 may be a preplasticizing type injection unit. The preplasticizing type injection unit supplies molten molding material inside a plasticizing cylinder to an injection cylinder and injects the molding material from the injection cylinder into the mold unit. A screw is disposed to be rotatable or rotatable and movable forward or rearward in the plasticizing cylinder and a plunger is disposed to be movable forward or rearward in the injection cylinder.

### Movement Unit

Similarly to the descriptions of the injection unit 300, in descriptions of the movement unit 400, the movement direction (left direction in Figs. 1 and 2) of the screw 330 during filling is referred to as a front side, and the movement direction (right direction in Figs. 1 and 2) of the screw 330 during plasticizing is referred to as a rear side.

The movement unit 400 moves the injection unit 300 forward or rearward with respect to the mold unit 10. In addition, the movement unit 400 presses the nozzle 320 to the mold unit 10 to generate a nozzle touch pressure. The movement unit 400 includes a hydraulic pump 410, a motor 420 which is a drive source, a hydraulic cylinder 430 which is a hydraulic actuator, or the like.

The hydraulic pump 410 includes a first port 411 and a second port 412. The hydraulic pump 410 is a pump which can rotate in both directions and switches a rotation direction of the motor 420. Accordingly, a working liquid (for example, oil) is sucked from any one of first port 411 and the second port 412 and is discharged from the other, and thus, a liquid pressure is generated. In addition, the hydraulic pump 410 sucks the working liquid from a tank 413 and can discharge the working liquid from any one of the first port 411 and the second port 412.

The motor 420 operates the hydraulic pump 410. The motor 420 drives the hydraulic pump 410 in the rotation direction and by rotation torque corresponding to the control signals from the controller 700. The motor 420 may be an electric motor or an electric servo motor.

The hydraulic cylinder 430 includes a cylinder body 431, a piston 432, and a piston rod 433. The cylinder body 431 is fixed to the injection unit 300. The piston 432 divides the inside of the cylinder body 431 into a front chamber 435 which is a first chamber and a rear chamber 436 which is a second chamber. The piston rod 433 is fixed to the stationary platen 110. The piston rod 433 penetrates the front chamber 435, and a cross-sectional area of the front chamber 435 is smaller than a cross-sectional area of the rear chamber 436.

The front chamber 435 of the hydraulic cylinder 430 is connected to the first port 411 of the hydraulic pump 410 via a first flow path 401. The working liquid discharged from the first port 411 is supplied to the front chamber 435 via the first flow path 401, and thus, the injection unit 300 is pushed forward. The injection unit 300 moves forward, and thus, the nozzle 320 is pressed to the stationary mold 11. The front chamber 435 functions as a pressure chamber which generates the nozzle touch pressure of the nozzle 320 by the pressure of the working liquid supplied from the hydraulic pump 410.

Meanwhile, the rear chamber 436 of the hydraulic cylinder 430 is connected to the second port 412 of the hydraulic pump 410 via a second flow path 402. The working liquid discharged from the second port 412 is supplied to the rear chamber 436 of the hydraulic cylinder 430 via the second flow path 402, and thus, the injection unit 300 is pushed rearward. The injection unit 300 moves rearward and thus, the nozzle 320 is separated from the stationary mold 11.

In a case where a pressure in the first flow path 401 exceeds a set value, a first relief valve 441 is opened, an excess working liquid in the first flow path 401 is returned to the tank 413, and thus, the pressure in the first flow path 401 is held to be the set value or less.

In a case where a pressure in the second flow path 402 exceeds a set value, a second relief valve 442 is opened, an excess working liquid in the second flow path 402 is returned to the tank 413, and thus, the pressure in the second flow path 402 is held to be the set value or less.

The flushing valve 443 is a valve which adjusts excess or deficiency of a circulation amount of the working liquid caused by a difference between the cross-sectional area of the front chamber 435 and the cross-sectional area of the rear chamber 436, and for example, as shown in Figs. 1 and 2, the flushing valve 443 is configured of a three-position and four-port spool valve.

In a case where the pressure in the first flow path 401 is lower than the pressure in the tank 413, a first check valve 451 is opened to supply the working liquid from the tank 413 to the first flow path 401.

In a case where the pressure in the second flow path 402 is lower than the pressure in the tank 413, a second check valve 452 is opened to supply the working liquid from the tank 413 to the second flow path 402.

An electromagnetic switching valve 453 is a control valve which controls the flow of the working liquid between the front chamber 435 of the hydraulic cylinder 430 and the first port 411 of the hydraulic pump 410. For example, the electromagnetic switching valve 453 is provided in the middle of the first flow path 401, and controls the flow of the working liquid in the first flow path 401.

For example, as shown in Figs. 1 and 2, the electromagnetic switching valve 453 is configured of a two-position and two-port spool valve. In a case where the spool valve is positioned at a first position (a position on the left side in Figs. 1 and 2), flows in both directions between the front chamber 435 and the first port 411 are permitted. Meanwhile, in a case where the spool valve is positioned at a second position (a position on the right side in Figs. 1 and 2), the flow from the front chamber 435 to the first port 411 is restricted. In this case, the flow from the first port 411 to the front chamber 435 is not restricted, but may be restricted.

A first pressure detector 455 detects a liquid pressure of the front chamber 435. The nozzle touch pressure is generated by the liquid pressure of the front chamber 435, and thus, the nozzle touch pressure can be detected using the first pressure detector 455. For example, the first pressure detector 455 is provided in the middle of the first flow path 401, and is provided at a position on the side of the front chamber 435 with respect to the electromagnetic switching valve 453. Irrespective of the state of the electromagnetic switching valve 453, the nozzle touch pressure can be detected.

The second pressure detector 456 is provided in the middle of the first flow path 401 and is provided at a position on the first port 411 side with respect to the electromagnetic switching valve 453. The second pressure detector 456 detects a liquid pressure between the electromagnetic switching valve 453 and the first port 411. In a case where the electromagnetic switching valve 453 permits flows in both directions between the first port 411 and the front chamber 435, the liquid pressure between the first port 411 and the electromagnetic switching valve 453, the liquid pressure between the electromagnetic switching valve 453 and the front chamber 435 are equal to each other. Accordingly, in this state, the nozzle touch pressure can be detected using the second pressure detector 456.

In addition, in the present embodiment, the nozzle touch pressure is detected using a pressure detector provided in the middle of the first flow path 401. However, for example, the nozzle touch pressure may be detected using a load cell or the like provided in the nozzle 320. That is, a pressure detector that detects the nozzle touch pressure may be provided in either the movement unit 400 or the injection unit 300.

Moreover, in the present embodiment, the hydraulic cylinder 430 is used as the movement unit 400. However, the present invention is not limited to this.

### Controller

For example, as shown in Figs. 1 and 2, the controller 700 includes a Central Processing Unit (CPU) 701, a recording medium 702 such as a memory, an input interface 703, and an output interface 704. The controller 700 performs various controls by causing the CPU 701 to execute a program stored in the recording medium 702. In addition, the controller 700 receives a signal from the outside through the input interface 703 and transmits a signal to the outside through the output interface 704.

The controller 700 is connected to an operation unit 750 or the display unit 760. The operation unit 750 receives an input operation from a user and outputs signals corresponding to the input operation to the controller 700. The display unit 760 displays an operation screen corresponding to the input operation of the operation unit 750 under the control of the controller 700. The operation screen is used for the setting of the injection molding machine or the like. A plurality of operation screens are provided, and thus, are displayed to be switched or to overlap each other. A user operates the operation unit 750 while viewing the operation screen displayed by the display unit 760 to perform the setting (including an input of a set value) of the injection molding machine or the like. For example, the operation unit 750 and the display unit 760 may be configured of a touch panel to be integrated with each other. In addition, in the present embodiment, the operation unit 750 and the display unit 760 are integrated with each other. However, the operation unit 750 and the display unit 760 may be provided to be independent to each other. In addition, a plurality of operation units 750 may be provided.

### Configuration of Injection Unit

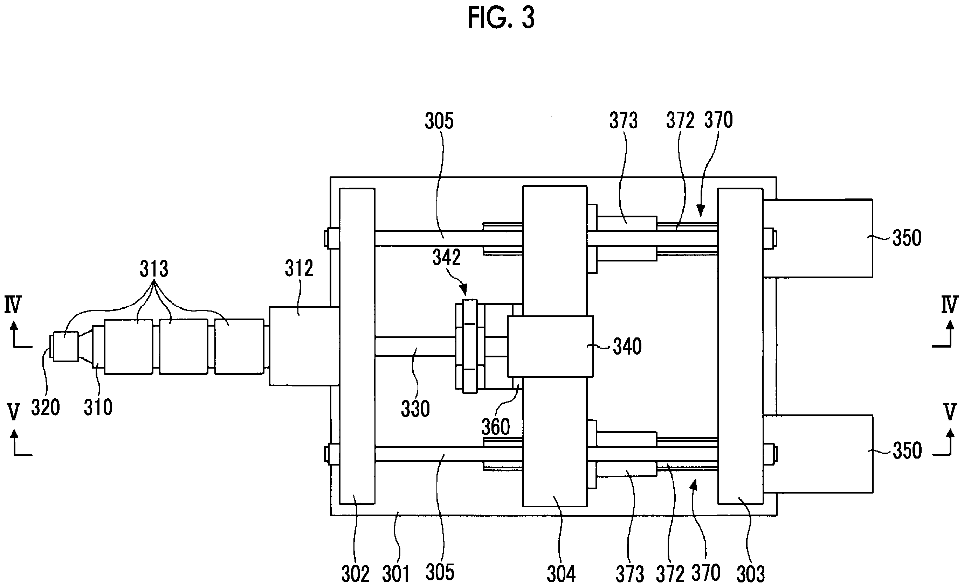

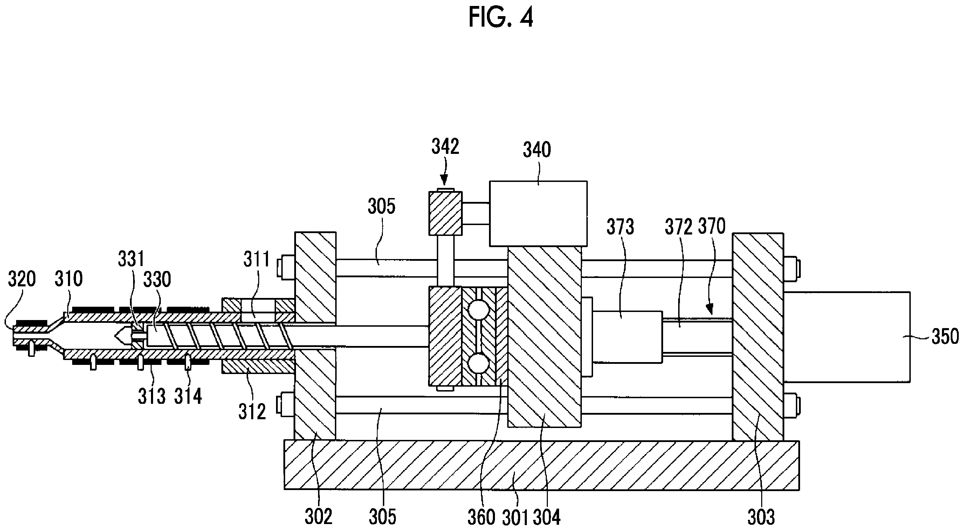

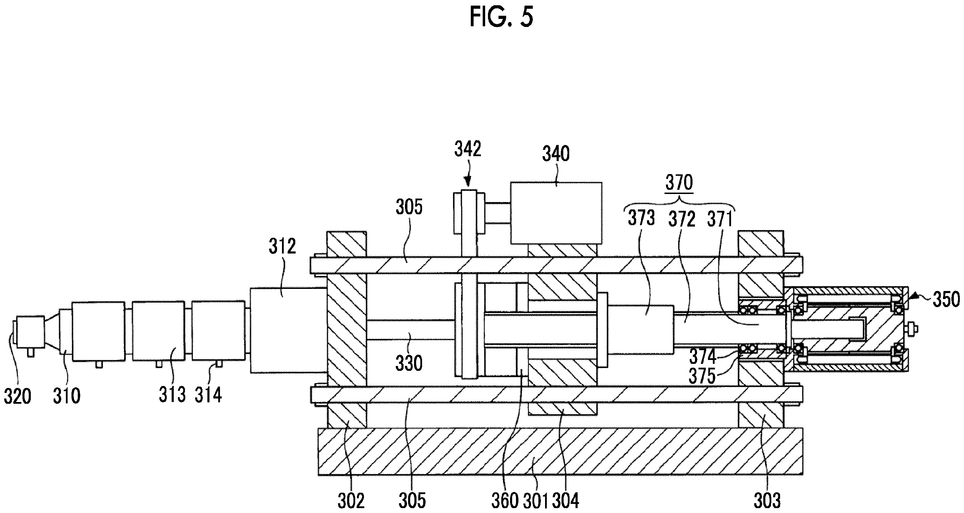

Fig. 3 is a top view showing an example of a structure of the injection unit according to an embodiment. Fig. 4 is a cross-sectional view of the injection unit taken along line IV-IV of Fig. 3. Fig. 5 is a cross-sectional view of the injection unit taken along line V-V of Fig. 3.

The injection unit 300 includes a front support 302 which holds a rear end portion of the cylinder 310 and a rear support 303 which is provided behind the front support 302. The front support 302 and the rear support 303 are fixed to the slide base 301.

A movable plate 304 is provided to be movable forward or rearward between the front support 302 and the rear support 303. Guides 305 of the movable plate 304 are bridged between the front support 302 and the rear support 303. In addition, the guides 305 may be placed on the slide base 301.

The plasticizing motor 340 may be assembled to the movable plate 304. A rotary motion of the plasticizing motor 340 is transmitted to the screw 330 by a rotation transmission mechanism 342 such as a belt or a pulley. In addition, the plasticizing motor 340 may be directly connected to an extension shaft of the screw 330 or may be disposed on the same straight line as that of the screw 330.

The injection motors 350 maybe assembled to the rear support 303. A rotary motion of each of the injection motors 350 is converted into a linear motion of the movable plate 304 by a motion conversion mechanism 370 and is transmitted to the screw 330.

The motion conversion mechanism 370 includes a rotation transmission shaft 371 which is rotated by the injection motor 350, a screw shaft 372 which is rotated by the rotation of the rotation transmission shaft 371, and a screw nut 373 which is screwed to the screw shaft 372 and is moved forward or rearward by the rotation of the screw shaft 372.

For example, the rotation transmission shaft 371 is spline-connected to a rotor inside the rotor of the injection motor 350. The rotation transmission shaft 371 includes a plurality of keys at intervals in a circumferential direction on an outer peripheral portion thereof. Meanwhile, the rotor of the injection motor 350 includes a plurality of key grooves, into which the plurality of keys are slidably inserted, on an inner peripheral portion thereof. The number of keys or the number of key grooves may be one.

Moreover, the rotation transmission shaft 371 of the present embodiment is spline-connected to the rotor inside the rotor of the injection motor 350. However, the present invention is not limited to this. For example, the rotation transmission shaft 371 may be connected to the rotor of the injection motor 350 by a friction force. In this case, a wedge or the like may be driven between the rotation transmission shaft 371 and the rotor.

The rotation transmission shaft 371 maybe integrally formed with the screw shaft 372 and may be formed separately from the screw shaft 372 and connected to the screw shaft 372.

As shown in Fig. 5, the rotation transmission shaft 371 or the screw shaft 372 is assembled to the rear support 303 to be not movable forward or rearward and to be rotatable via a bearing 374 and a bearing holder 375 which holds an outer ring of the bearing 374. Meanwhile, the screw nut 373 is fixed to the movable plate 304.

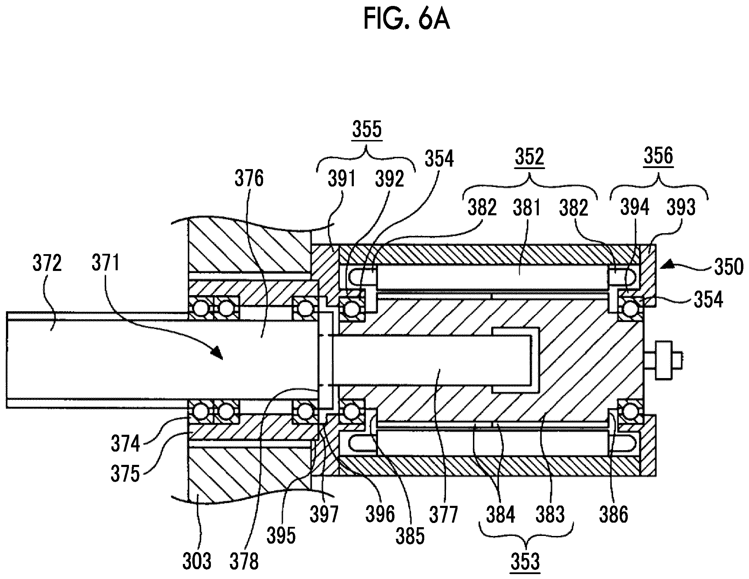

A motion conversion mechanisms assembly is configured of the motion conversion mechanism 370, the bearing 374, the bearing holder375, or the like. The motion conversion mechanism assembly is assembled in advance and attached to the rear support 303 via the injection motor 350. For example, the injection motor 350 is fixed to the rear support 303 by a bolt or the like and the bearing holder 375 is spigot-fitted to a front flange 355 (refer to Fig. 6A) of the injection motor 350. The front flange 355 includes a plurality of hole wall surfaces 395 and 396 which extends in a front-rear direction and a stepped surface 397 which has a step formed between the plurality of hole wall surfaces 395 and 396. The front hole wall surface 395 of the front flange 355 and an outer peripheral surface of the bearing holder 375 come into contact with each other and the stepped surface 397 of the front flange 355 and a rear end surface of the bearing holder 375 come into contact with each other. Accordingly, centering and positioning in the front-rear direction between the motion conversion mechanism assembly and the injection motor 350 are realized.

In addition, the front flange 355 (more specifically, a front flange body portion 391 described later) of the injection motor 350 may be spigot-fitted to the rear support 303. For example, the rear support 303 includes a plurality of hole wall surfaces which extend in the front-rear direction and a stepped surface which has a step formed between the plurality of hole wall surfaces. A rear hole wall surface of the rear support 303 and the outer peripheral surfaced of the front flange 355 come into contact with each other and the stepped surface of the rear support 303 and a front end surface of the front flange 355 come into contact with each other. Accordingly, centering and positioning in the front-rear direction between the rear support 303 and the injection motor 350 are realized.

If the injection motors 350 are driven and the rotation transmission shafts 371 are rotated, the screw shafts 372 are rotated, and thus, the screw nuts 373 move forward or rearward. Accordingly, the movable plate 304 moves forward or rearward, and thus, the screw 330 moves forward or rearward inside the cylinder 310.

As shown in Fig. 3, the injection motors 350 and the motion conversion mechanisms 370 are respectively disposed symmetrically about a center line of the screw 330. In addition, the number of the injection motors 350 and the number of the motion conversion mechanism 370 may be 1, respectively, and the injection motor 350 and the motion conversion mechanism 370 may be disposed on the center line of the screw 330.

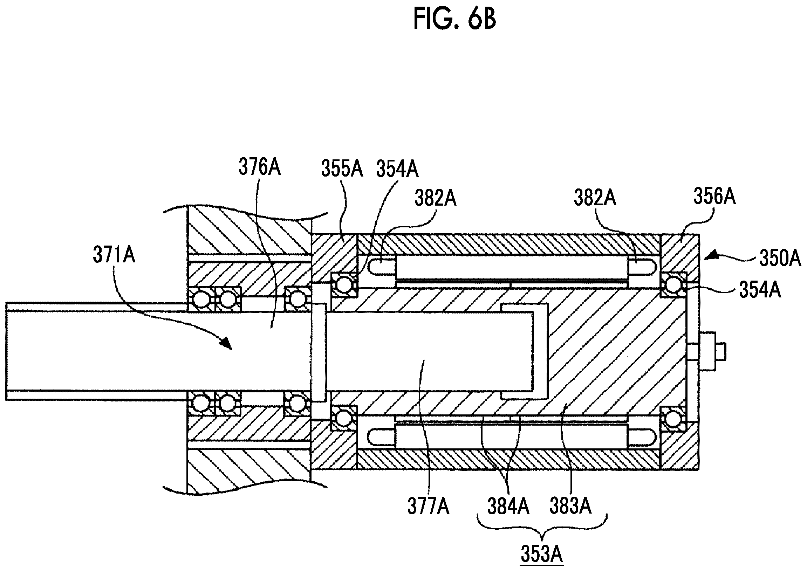

Figs. 6A and 6B are cross-sectional views for comparing a main portion of an injection unit of a first embodiment and a main portion of an injection unit according to a second embodiment with each other. Fig. 6A is a cross-sectional view showing the main portion of the injection unit according to the first embodiment and is a cross-sectional view showing a portion of the injection unit shown in Fig. 5 in an enlarged manner. Fig. 6B is a cross-sectional view showing the main portion of the injection unit according to the second embodiment.

The injection motor 350 includes a stator 352, a rotor 353, a motor bearing 354 which rotatably supports the rotor 353 with respect to the stator 352, the front flange 355 which holds the front motor bearing 354, and a rear flange 356 which holds the rear motor bearing 354. The stator 352 is interposed between the front flange 355 positioned in front of the stator 352 and the rear flange 356 positioned behind the stator 352 so as to be held.

For example, the stator 352 includes a stator core 381 and a stator coil 382. The stator core 381 may be formed by laminating electrical steel sheets. The stator coil 382 forms a rotating magnetic field. The stator coil 382 is disposed in the slot of the stator core 381. Moreover, a permanent magnet may be used instead of the stator coil 382.

For example, the rotor 353 includes a rotor core 383 and a permanent magnet 384 serving as a magnet portion. The rotor core 383 holds inner rings of the motor bearings 354 at front and rear end portions. The permanent magnet 384 is attached to the center portion of the rotor core 383. The permanent magnet 384 is rotated by th3 rotating magnetic field of the stator coil 382. The permanent magnet 384 is attached to an outer periphery of the rotor core 383. In addition, instead of the permanent magnet, an electromagnet may be used as the magnet portion.

The motor bearings 354 rotatably supports the rotor 353 with respect to the stator 352. The motor bearings 354 are provided on front and rear end portions of the rotor 353. In Fig. 6A, the number of the motor bearings 354 is two. However, the number of the motor bearings 354 may be three or more. In the motor bearings 354 may be provided separately from the bearing 374 of the screw shaft 372.

The front flange 355 holds the motor bearing 354 which rotatably supports a front end portion of the rotor 353. As shown in Fig. 6A, the front flange 355 includes the ring-shaped front flange body portion 391 and a front flange outer ring holding portion 392 which protrudes rearward from the front flange body portion 391. The front flange body portion 391 is provided in front of the stator coil 382 and is provided on a rear surface of the rear support 303. Meanwhile, the front flange outer ring holding portion 392 is inserted radially inward of the stator coil 382 from the front side of the stator coil 382 and holds an outer ring of the motor bearing 354 which rotatably supports the front end portion of the rotor 353.

The rear flange 356 holds the motor bearing 354 which rotatably holds a rear end portion of the rotor 353. As shown in Fig. 6A, the rear flange 356 includes a ring-shaped rear flange body portion 393 and a rear flange outer ring holding portion 394 which protrudes forward from the rear flange body portion 393. The rear flange body portion 393 is provided behind the stator coil 382. Meanwhile, the rear flange outer ring holding portion 394 is inserted radially inward of the stator coil 382 from the rear side of the stator coil 382 and holds the outer ring of the motor bearing 354 which rotatably supports the rear end portion of the rotor 353.

The stator 352 is interposed between the front flange body portion 391 and the rear flange body portion 393 from the front and rear sides so as to be held. The permanent magnet 384 of the rotor 353 is provided between the front flange body portion 391 and the rear flange body portion 393. That is, the permanent magnet 384 is disposed behind the front flange body portion 391 and in front of the rear flange body portion 393.

The rotary motion of the injection motor 350 is transmitted to the screw shaft 372 via the rotation transmission shaft 371 and is converted into a linear motion of the screw nut 373 screwed to the screw shaft 372. The injection motor 350, the rotation transmission shaft 371, the screw shaft 372, and the screw nut 373 are disposed on the same straight line.

The rotation transmission shaft 371 includes an extension shaft portion 376 which extends rearward from the screw shaft 372 disposed in front of the rotation transmission shaft 371 and a connection shaft portion 377 which extends rearward from the extension shaft portion 376 and is connected to the rotor 353 inside the rotor 353. Accordingly, when viewed from a direction (for example, up-down direction in Fig. 6A) orthogonal to the axial direction of the injection motor 350, the injection motor 350 and a portion of the motion conversion mechanism 370 can overlap each other, and thus, it is possible to shorten a longitudinal length of the injection unit 300. Therefore, it is possible to shorten the entire length of the injection molding machine.

For example, the connection shaft portion 377 of the rotation transmission shaft 371 is spline-connected to the rotor 353 inside the rotor 353 of the injection motor 350. The connection shaft portion 377 of the rotation transmission shaft 371 includes a plurality of keys at intervals in a circumferential direction on an outer peripheral portion thereof. Meanwhile, the rotor 353 includes a plurality of key grooves, into which the plurality of keys are slidably inserted, on an inner peripheral portion thereof. The number of keys or the number of key grooves may be one.

Moreover, the connection shaft portion 377 of the rotation transmission shaft 371 is spline-connected to the rotor 353 inside the rotor 353 of the injection motor 350. However, the present invention is not limited to this. For example, the connection shaft portion 377 of the rotation transmission shaft 371 may be connected to the rotor 353 of the injection motor 350 by a friction force. In this case, a wedge or the like may be driven between the connection shaft portion 377 of the rotation transmission shaft 371 and the rotor 353.

The rotation transmission shaft 371 maybe integrally formed with the screw shaft 372 and may be formed separately from the screw shaft 372 and connected to the screw shaft 372.

At least a portion of the rotation transmission shaft 371 is provided radially inside the injection motor 350 from the permanent magnet 384 of the injection motor 350, and when viewed in the direction (for example, the up-down direction in Fig. 6A) orthogonal to the axial direction of the injection motor 350, at least a portion of the rotation transmission shaft 371 overlaps the permanent magnet 384. Accordingly, it is possible to more shorten a longitudinal direction of the injection unit 300. As described above, the permanent magnet 384 is disposed behind the front flange body portion 391 and in front of the rear flange body portion 393.

At least a portion of the motor bearing 354 is provided radially inside the injection motor 350 from the stator coil 382, and when viewed in the direction (for example, the up-down direction in Fig. 6A) orthogonal to the axial direction of the injection motor 350, at least a portion of the motor bearing 354 overlaps the stator coil 382. Accordingly, it is possible to more shorten a longitudinal direction of the injection unit 300.

For example, the motor bearing 354 held by the front flange 355 is disposed radially inside the injection motor 350 from the stator coil 382, and when view in the direction orthogonal to the axial direction of the injection motor 350, the motor bearing 354 overlaps the stator coil 382. Due to the overlapping, unlike an injection motor 350A of the second embodiment shown in Fig. 6B, the injection motor 350 of the first embodiment shown in Fig. 6A has the following structures (1) to (5). According to the following structures (1) to (5), the motor bearing 354 and the stator coil 382 can overlap each other in the axial direction of the injection motor 350 while an increase in an axial dimension of the injection motor 350 is suppressed.
(1) As shown in Fig. 6A, the front flange 355 of the first embodiment includes the ring-shaped front flange body portion 391 and the tubular front flange outer ring holding portion 392 which protrudes rearward from the front flange body portion 391. The front flange body portion 391 is provided in front of the stator coil 382. Meanwhile, the front flange outer ring holding portion 392 is inserted radially inward of the stator coil 382 from the front side of the stator coil 382 and holds an outer ring of the motor bearing 354 which rotatably supports the front end portion of the rotor 353. The motor bearing 354 is held by the front flange outer ring holding portion 392 radially inside the stator coil 382. Accordingly, the motor bearing 354 can overlap the stator coil 382 in the axial direction of the injection motor 350. As a result, it is possible to shorten the longitudinal length of the injection unit 300.
   Meanwhile, as shown in Fig. 6B, a front flange 355A of the second embodiment holds an outer ring of a motor bearing 354A, which rotatably supports a front end portion of a rotor 353A, in front of a stator coil 382A. Accordingly, the motor bearing 354A does not overlap the stator coil 382A in the axial direction of the injection motor 350A.
(2) As shown in Fig. 6A, the motor bearing 354 held by the front flange 355 of the first embodiment is disposed so as not to protrude radially outward from the rotor 353, and thus, the motor bearing 354 is disposed radially inside the outer periphery of the permanent magnet 384 of the rotor 353. Accordingly, the motor bearing 354 held by the front flange 355 can be disposed inside the stator coil 382 so as not to interference with the stator coil 382, and the motor bearing 354 can overlap the stator coil 382 in the axial direction of the injection motor 350. As a result, it is possible to shorten the longitudinal length of the injection unit 300.
   Meanwhile, as shown in Fig. 6B, the motor bearing 354A held by the front flange 355A of the second embodiment protrudes radially outward from the rotor 353A (specifically, the outer periphery of the permanent magnet 384A). Accordingly, if the motor bearing 354A held by the front flange 355A is shifted rearward and is disposed inside the stator coil 382A, the motor bearing 354A interferes with the stator coil 382A.
(3) The rotor core 383 of the first embodiment includes the stepped surface 385, which forms a gap between the rotor core 383 and the motor bearing 354 held by the front flange 355, on the outer periphery of the rotor core 383. An outer diameter of a portion (a portion which holds the inner ring of the motor bearing 354) in front of the stepped surface 385 is smaller than an outer diameter of a portion (a portion which is attached to the permanent magnet 384) behind the stepped surface 385. Accordingly, a gap in the radial direction between the portion in front of the stepped surface 385 and the stator coil 382 is large, the motor bearing 354 can be disposed inside the stator coil 382 so as not to interfere with the stator coil 382, and the motor bearing 354 can overlap the stator coil 382 in the axial direction of the injection motor 350. As a result, it is possible to shorten the longitudinal length of the injection unit 300.
   Meanwhile, the rotor core 383A of the second embodiment does not include a stepped surface, which forms a gap between the rotor core 383A and the motor bearing 354A held by the front flange 355A, on the outer periphery of the rotor core 383A. Accordingly, a gap in the radial direction between the rotor core 383A and the stator coil 382A is small, and it is difficult to dispose the motor bearing 354A inside the stator coil 382A such that the motor bearing 354A does not interfere with the stator coil 382A.
(4) The front end portion of the rotor core 383 of the first embodiment overlaps the extension shaft portion 376 in the radial direction. Accordingly, a gap in the radial direction between the front end portion of the rotor core 383 and the stator coil 382 is large, the motor bearing 354 can be disposed inside the stator coil 382 so as not to interfere with the stator coil 382, and the motor bearing 354 can overlap the stator coil 382 in the axial direction of the injection motor 350. As a result, it is possible to shorten the longitudinal length of the injection unit 300.
   Meanwhile, the front end portion of the rotor core 383A of the second embodiment is disposed radially outside the extension shaft portion 376A. Accordingly, a gap in the radial direction between the front end portion of the rotor core 383A and the stator coil 382A is small, and it is difficult to dispose the motor bearing 354A inside the stator coil 382A such that the motor bearing 354A does not interfere with the stator coil 382A. Accordingly, the motor bearing 354A cannot overlap the stator coil 382A in the axial direction of the injection motor 350A.
(5) The rotation transmission shaft 371 of the first embodiment includes the stepped surface 378 between the extension shaft portion 376 and the connection shaft portion 377. An outer diameter of the connection shaft portion 377 is smaller than an outer diameter of the extension shaft portion 376. Accordingly, a gap in the radial direction between the connection shaft portion 377 and the stator coil 382 is large, the motor bearing 354 can be disposed inside the stator coil 382 so as not to interfere with the stator coil 382, and the motor bearing 354 can overlap the stator coil 382 in the axial direction of the injection motor 350. As a result, it is possible to shorten the longitudinal length of the injection unit 300.

Meanwhile, a rotation transmission shaft 371A of the second embodiment does not include a stepped surface between the extension shaft portion 376A and a connection shaft portion 377A. An outer diameter of the connection shaft portion 377A is approximately the same as an outer diameter of the extension shaft portion 376A. A gap in the radial direction between the connection shaft portion 377A and the stator coil 382A is small, and it is difficult to dispose the motor bearing 354A inside the stator coil 382A such that the motor bearing 354A does not interfere with the stator coil 382A. Accordingly, the motor bearing 354A cannot overlap the stator coil 382A in the axial direction of the injection motor 350A.

In addition, the injection motor 350 of the first embodiment shown in Fig. 6A includes the above-described structures (1) to (5). However, the injection motor 350 may include at least one of the above-described structures (1) to (5). The injection motor 350 may include any structure as long as it can cause the motor bearing 354 and the stator coil 382 to overlap each other in the axial direction of the injection motor 350 while suppressing the increase in the axial dimension of the injection motor 350.

Similarly, the motor bearing 354 held by the rear flange 356 is disposed radially inside the injection motor 350 from the stator coil 382, and when view in the direction orthogonal to the axial direction of the injection motor 350, the motor bearing 354 overlaps the stator coil 382. Due to the overlapping, unlike the injection motor 350A of the second embodiment shown in Fig. 6B, the injection motor 350 of the first embodiment shown in Fig. 6A has the following structures (6) to (9). According to the following structures (6) to (9), the motor bearing 354 and the stator coil 382 can overlap each other in the axial direction of the injection motor 350 while the increase in the axial dimension of the injection motor 350 is suppressed.
(6) As shown in Fig. 6A, the rear flange 356 of the first embodiment includes the ring-shaped rear flange body portion 393 and the tubular rear flange outer ring holding portion 394 which protrudes forward from the rear flange body portion 393. The rear flange body portion 393 is provided behind the stator coil 382. Meanwhile, the rear flange outer ring holding portion 394 is inserted radially inward of the stator coil 382 from the rear side of the stator coil 382 and holds an outer ring of the motor bearing 354 which rotatably supports the rear end portion of the rotor 353. The motor bearing 354 is held by the rear flange outer ring holding portion 394 radially inside the stator coil 382. Accordingly, the motor bearing 354 can overlap the stator coil 382 in the axial direction of the injection motor 350. As a result, it is possible to shorten the longitudinal length of the injection unit 300.
   Meanwhile, as shown in Fig. 6B, a rear flange 356A of the second embodiment holds an outer ring of a motor bearing 354A, which rotatably supports a rear end portion of a rotor 353A, behind a stator coil 382A. Accordingly, the motor bearing 354 does not overlap the stator coil 382A in the axial direction of the injection motor 350A.
(7) As shown in Fig. 6A, the motor bearing 354 held by the rear flange 356 of the first embodiment is disposed so as not to protrude radially outward from the rotor 353, and thus, the motor bearing 354 is disposed radially inside the outer periphery of the permanent magnet 384 of the rotor 353. Accordingly, the motor bearing 354 held by the rear flange 356 can be disposed inside the stator coil 382 so as not to interference with the stator coil 382, and the motor bearing 354 can overlap the stator coil 382 in the axial direction of the injection motor 350. As a result, it is possible to shorten the longitudinal length of the injection unit 300.
   Meanwhile, as shown in Fig. 6B, the motor bearing 354A held by the rear flange 356A of the second embodiment protrudes radially outward from the rotor 353A. Accordingly, if the motor bearing 354A held by the rear flange 356A is shifted forward and is disposed inside the stator coil 382A, the motor bearing 354A interferes with the stator coil 382A.
(8) The rotor core 383 of the first embodiment includes the stepped surface 386, which forms a gap between the rotor core 383 and the motor bearing 354 held by the rear flange 356, on the outer periphery of the rotor core 383. An outer diameter of a portion (a portion which holds the inner ring of the motor bearing 354) behind the stepped surface 386 is smaller than an outer diameter of a portion (a portion which is attached to the permanent magnet 384) in front of the stepped surface 386. Accordingly, a gap in the radial direction between the portion behind the stepped surface 386 and the stator coil 382 is large, the motor bearing 354 can be disposed inside the stator coil 382 so as not to interfere with the stator coil 382, and the motor bearing 354 can overlap the stator coil 382 in the axial direction of the injection motor 350. As a result, it is possible to shorten the longitudinal length of the injection unit 300.
   Meanwhile, the rotor core 383A of the second embodiment does not include a stepped surface, which forms a gap between the rotor core 383A and the motor bearing 354A held by the rear flange 356A, on the outer periphery of the rotor core 383A. Accordingly, a gap in the radial direction between the rotor core 383A and the stator coil 382A is small, and it is difficult to dispose the motor bearing 354A inside the stator coil 382A such that the motor bearing 354A does not interfere with the stator coil 382A.
(9) The rear end portion of the rotor core 383 of the first embodiment overlaps the extension shaft portion 376 in the radial direction. Accordingly, a gap in the radial direction between the rear end portion of the rotor core 383 and the stator coil 382 is large, the motor bearing 354 can be disposed inside the stator coil 382 so as not to interfere with the stator coil 382, and the motor bearing 354 can overlap the stator coil 382 in the axial direction of the injection motor 350. As a result, it is possible to shorten the longitudinal length of the injection unit 300.

Meanwhile, the rear end portion of the rotor core 383A of the second embodiment is disposed radially outside the extension shaft portion 376A. Accordingly, a gap in the radial direction between the rear end portion of the rotor core 383A and the stator coil 382A is small, and it is difficult to dispose the motor bearing 354A inside the stator coil 382A such that the motor bearing 354A does not interfere with the stator coil 382A. Accordingly, the motor bearing 354A cannot overlap the stator coil 382A in the axial direction of the injection motor 350A.

In addition, the injection motor 350 of the first embodiment shown in Fig. 6A includes the above-described structures (6) to (9). However, the injection motor 350 may include at least one of the above-described structures (6) to (9). The injection motor 350 may include any structure as long as it can cause the motor bearing 354 and the stator coil 382 to overlap each other in the axial direction of the injection motor 350 while suppressing the increase in the axial dimension of the injection motor 350.

### Modification and Improvement

Hereinbefore, the embodiment or the like of the injection molding machine is described. However, the present invention is not limited to the above-described embodiment or the like, and various modifications and improvements are possible within a scope of the gist of the present invention described in claims.

In the above-described embodiment, the example in which the present invention is applied to the injection motor 350 is described. However, the present invention may be applied to other motors. For example, the motors to which the present invention can be applied include the mold clamping motor 160, the ejector motor 210, or the like. The motor may be any one as long as it rotates the screw shaft via the rotation transmission shaft so as to move the screw nut screwed to the screw shaft forward or rearward. In a case where the present invention is applied to the mold clamping motor 160, it is possible to shorten a longitudinal length of the mold clamping unit 100. Moreover, in a case where the present invention is applied to the ejector motor 210, it is possible to shorten a longitudinal length of the ejector unit 200.

### Brief Description of the Reference Symbols

100: mold clamping unit
160: mold clamping motor
170: motion conversion mechanism
171: screw shaft
172: screw nut
200: ejector unit
210: ejector motor
220: motion conversion mechanism
300: injection unit
302: front support
303: rear support
304: movable plate
340: plasticizing motor
350: injection motor
352: stator
353: rotor
354: motor bearing
355: front flange
356: rear flange
370: motion conversion mechanism
371: rotation transmission shaft
372: screw shaft
373: screw nut
377: connection shaft portion of rotation transmission shaft
381: stator core
382: stator coil
383: rotor core
384: permanent magnet (magnet portion)

## Claims

1. An injection molding machine, comprising:
a motor (160, 183, 210, 350) which includes a stator (352) and a rotor (353);
a rotation transmission shaft (371) which is rotated by the motor (160, 183, 210, 350);
a screw shaft (171, 181, 372) which is rotated bya rotation of the rotation transmission shaft (371); and
a screw nut (172, 182, 373) which is screwed to the screw shaft (171, 181, 372) and is moved forward or rearward by a rotation of the screw shaft (171, 181, 372),
wherein the motor (160, 183, 210, 350), the rotation transmission shaft (371), the screw shaft (171, 181, 372), and the screw nut (172, 182, 373) are disposed on the same straight line, and
wherein the rotation transmission shaft (371) includes a connection shaft portion (377) which is connected to the rotor (353) in a portion inside the rotor (353),
wherein the stator (352) includes a coil (382) which forms a rotating magnetic field, and the rotor (353) includes a magnet portion which is rotated by the rotating magnetic field, **characterized in that** the motor (160, 183, 210, 350) includes a motor bearing (354) which rotatably supports the rotor (353) with respect to the stator (352), and
wherein at least a portion of the motor bearing (354) overlaps the coil (382) in an axial direction of the motor (160, 183, 210, 350).

2. The injection molding machine according to claim 1,
wherein at least a portion of the rotation transmission shaft (371) overlaps the magnet portion in an axial direction of the motor (160, 183, 210, 350).

3. The injection molding machine according to any one of claims 1 to 2,
wherein the connection shaft portion (377) of the rotation transmission shaft (371) is spline-connected to the rotor (353) in a portion inside the rotor (353).

## Patentansprüche

1. Spritzgießmaschine, umfassend:
einen Motor (160, 183, 210, 350), der einen Stator (352) und einen Rotor (353) umfasst,
eine Drehungsübertragungswelle (371), die durch den Motor (160, 183, 210, 350) gedreht wird,
eine Schraubenwelle (171, 181, 372), die durch eine Drehung der Drehungsübertragungswelle (371) gedreht wird, und
eine Schraubenmutter (172, 182, 373), die auf die Schraubenwelle (171, 181, 372) geschraubt ist und durch eine Drehung der Schraubenwelle (171, 181, 372) vorwärts oder rückwärts bewegt wird,
wobei der Motor (160, 183, 210, 350), die Drehungsübertragungswelle (371), die Schraubenwelle (171, 181, 372) und die Schraubenmutter (172, 182, 373) auf der gleichen geraden Linie angeordnet sind und
wobei die Drehungsübertragungswelle (371) einen Verbindungswellenabschnitt (377) umfasst, der in einem Abschnitt innerhalb des Rotors (353) mit dem Rotor (353) verbunden ist,
wobei der Stator (352) eine Spule (382) umfasst, die ein sich drehendes Magnetfeld bildet, und der Rotor (353) einen Magnetabschnitt umfasst, der durch das sich drehende Magnetfeld gedreht wird,
**dadurch gekennzeichnet, dass**
der Motor (160, 183, 210, 350) ein Motorlager (354) umfasst, das den Rotor (353) drehbar in Bezug auf den Stator (352) trägt, und
wobei wenigstens ein Abschnitt des Motorlagers (354) die Spule (382) in einer Axialrichtung des Motors (160, 183, 210, 350) überlappt.

2. Spritzgießmaschine nach Anspruch 1,
wobei wenigstens ein Abschnitt der Drehungsübertragungswelle (371) den Magnetabschnitt in einer Axialrichtung des Motors (160, 183, 210, 350) überlappt.

3. Spritzgießmaschine nach einem der Ansprüche 1 bis 2,
wobei der Verbindungswellenabschnitt (377) der Drehungsübertragungswelle (371) in einem Abschnitt innerhalb des Rotors (353) mit dem Rotor (353) keilverbunden ist.

## Revendications

1. Une machine de moulage par injection, comprenant :
un moteur (160, 183, 210, 350) qui inclut un stator (352) et un rotor (353) ;
un arbre de transmission de rotation (371) qui est mis en rotation par le moteur (160, 183, 210, 350) ;
un arbre de vis (171, 181, 372) qui est mis en rotation par une rotation de l'arbre de transmission de rotation (371) ; et
un écrou de vis (172, 182, 373) qui est vissé à l'arbre de vis (171, 181, 372) et est déplacé vers l'avant ou vers l'arrière par une rotation de l'arbre de vis (171, 181, 372),
dans laquelle le moteur (160, 183, 210, 350), l'arbre de transmission de rotation (371), l'arbre de vis (171, 181, 372) et l'écrou de vis (172, 182, 373) sont disposés sur la même ligne droite, et
dans laquelle l'arbre de transmission de rotation (371) inclut une partie arbre de liaison (377) qui est reliée au rotor (353) dans une partie à l'intérieur du rotor (353),
dans laquelle le stator (352) inclut une bobine (382) qui forme un champ magnétique rotatif, et le rotor (353) inclut une partie aimant qui est mise en rotation par le champ magnétique rotatif,
**caractérisée en ce que**
le moteur (160, 183, 210, 350) inclut un roulement de moteur (354) qui supporte en rotation le rotor (353) par rapport au stator (352), et
dans laquelle au moins une partie du roulement de moteur (354) chevauche la bobine (382) dans une direction axiale du moteur (160, 183, 210, 350).

2. La machine de moulage par injection selon la revendication 1,
dans laquelle au moins une partie de l'arbre de transmission de rotation (371) chevauche la partie aimant dans une direction axiale du moteur (160, 183, 210,350).

3. La machine de moulage par injection selon l'une quelconque des revendications 1 à 2,
dans laquelle la partie arbre de liaison (377) de l'arbre de transmission de rotation (371) est reliée par cannelures au rotor (353) dans une partie à l'intérieur du rotor (353).
